# EUROPEAN PATENT SPECIFICATION

(11) **EP 3 453 873 B1**
(45) Date of publication and mention of the grant of the patent: **12.08.2020**
(21) Application number: 18780013.1
(22) Date of filing: 21.03.2018
(51) Int. Cl.: F03D 7/04, F03D 80/70, F03D 7/00

(54) **WIND TURBINE BLADE PITCH VARIATION DEVICE, PITCH VARIATION METHOD, PITCH VARIATION CONTROL DEVICE, AND WIND TURBINE**
VORRICHTUNG ZUR VERSTELLUNG DES NEIGUNGSWINKELS EINER WINDTURBINENSCHAUFEL, NEIGUNGSWINKELVERSTELLVERFAHREN, VERFAHREN ZUR STEUERUNG DER NEIGUNGSWINKELVERSTELLUNG UND WINDTURBINE
DISPOSITIF DE VARIATION DE PAS DE PALE D'ÉOLIENNE, PROCÉDÉ DE VARIATION DE PAS, DISPOSITIF DE COMMANDE DE VARIATION DE PAS ET ÉOLIENNE

(30) Priority: 06.07.2017 CN 201710546447
(43) Date of publication of application: 13.03.2019
(73) Proprietor: Beijing Goldwind Science & Creation Windpower Equipment Co., Ltd., Beijing 100176 (CN)
(72) Inventor: GU, Yaqi, Beijing 100176 (CN); ZHU, Bing, Beijing 100176 (CN)
(74) Representative: Vossius & Partner Patentanwälte Rechtsanwälte mbB
(86) International application number: PCT/CN2018/079792
(87) International publication number: WO 2019/007105

(56) References cited:
- CN-A- 102 734 067
- CN-A- 103 867 388
- CN-U- 201 953 567
- CN-U- 206 054 179
- CN-U- 206 290 368
- DE-U1-202015 001 902
- KR-B1- 101 548 690
- KR-U- 20140 003 908
- US-A1- 2011 020 136
- US-A1- 2013 058 784
- US-A1- 2013 193 686

## Description

### FIELD

The present application relates to the field of wind power generation device, and in particular relates to a pitch varying device, a pitch varying method and a pitch varying control device for a wind turbine blade and a wind turbine.

### BACKGROUND

The invention relates to a pitch varying device according to claim 1, a method for a pitch varying device according to claim 6 and a control device according to claim 10. A pitch varying system for a wind turbine is used to adjust a blade pitch angle, to allow the wind turbine to work in the optimal working condition, and the pitch varying system is also an important part of a safety system of the wind turbine, which can ensure the normal start and stop and the emergency stop in a special situation of the wind turbine. The wind turbine is in a small-angle pitch varying mode for about 70% of the working time, which requires the pitch varying system to have a high accuracy and a pitch varying mechanism to have a short actuating stroke. The wind turbine is in a large-angle pitch varying mode for about 30% of the working time, which requires the pitch varying system to have a quick response and the pitching mechanism to have a long actuating stroke.

The existing gear-driven pitch varying system is a set of pitch varying actuator, wherein a pitch varying motor drives a pitch varying speed reducer, the pitch varying speed reducer drives a pitch varying output gear to rotate, the pitch varying output gear drives a pitch bearing to rotate, and the pitch bearing drives blades to vary the blade pitch. A pitch varying driving wheel (i.e., the pitch varying output gear) has outer teeth, the pitch bearing has inner teeth, and the blades are fixed to the pitch bearing by bolts. In a case that the pitch bearing is driven by the gear, some teeth of both the pitch varying output gear and the pitch bearing may be abraded during the small-angle pitch varying mode, causing excessive abrasion of the inner teeth of the pitch bearing, and resulting in fatigue failure of the gear, and eventually the gear will be broken and damaged. Damages to the gear of the pitch bearing will result in abnormal pitch varying, and a new pitch bearing is required to replace the broken one, which will increase the maintenance cost of the wind turbine.

DE 202015001902 U1 relates to a wind turbine having an adjustment unit, and the adjustment unit is configured to adjust a pitch angle of a rotor blade. In the wind turbine, the rotor blade is mounted on a rotor hub by means of a pivot bearing. The pivot bearing includes oppositely rotatable bearing rings. The adjustment unit includes two adjustment actuators, the adjustment actuators are arranged on a carrier part rigidly connected with the bearing ring which is fastened to the rotor hub. The adjustment actuators have a linking point on the carrier part and a linking point on the bearing ring connected with the rotor blade. Two adjustment actuators may be extended or retracted simultaneously to oppositely rotate the two bearings, or, one adjustment actuator be extended and the other be retracted to oppositely rotate the two bearings, so as to adjust the pitch angle of the rotor blade.

US 2013193686 A1 relates to a system and method for determining pitch angles for a wind turbine during peak shaving. The system includes a sensor and a turbine controller. The turbine controller receives signals from the sensor, and a target pitch angle may be determined based on a mathematical relationship between the target pitch angle and the peak shaving parameter. The turbine controller can control the pitch angle by transmitting control signals to a pitch adjustment mechanism.

### SUMMARY

A pitch varying device, a pitch varying method and a pitch varying control device for a wind turbine blade and a wind turbine are provided according to the present application, to address the problem that a transmission gear is severely abraded during the small-angle pitch varying mode when a gear driving system is employed in the existing wind turbine.

In a first aspect, a pitch varying device for a wind turbine blade is provided according to an embodiment of the present application, and is configured to control a pitch angle of a blade rotatably mounted on a hub, the blade is mounted on the hub through a pitch bearing, and the pitch varying device for the wind turbine blade includes:
a disc-type driving structure fixedly mounted on the blade and being perpendicular to an axis of the pitch bearing, wherein a track surrounding the axis of the pitch bearing is provided on the disc-type driving structure;
a first linear telescopic driving mechanism having one end hinged to the hub and another end connected to the track through a first clamping member capable of clamping the track, wherein the first linear telescopic driving mechanism and the first clamping member are connected through hinge connection; and
a second linear telescopic driving mechanism having one end hinged to the hub and another end connected to the track through a second clamping member capable of clamping the track, wherein the second linear telescopic driving mechanism and the second clamping member are connected through hinge connection; wherein
in a case that an included angle between a target pitch angle and a present pitch angle is greater than a preset threshold, the second linear telescopic driving mechanism is configured to drive the disc-type driving structure); and
in a case that the included angle is smaller than or equal to the preset threshold, the first linear telescopic driving mechanism is configured to drive the disc-type driving structure.

In a second aspect, a control method for the pitch varying device for the wind turbine blade is further provided according to an embodiment of the present application, including:
acquiring an included angle between a target pitch angle and a present pitch angle;
comparing the included angle with a preset threshold; and
in a case that the included angle is greater than the preset threshold, sending a first control signal, wherein the first control signal is configured to control the second linear telescopic driving mechanism to drive the disc-type driving structure, to allow the blade to
   approach the target pitch angle; and
in a case that the included angle is smaller than or equal to the preset threshold, sending a second control signal, wherein the second control signal is configured to control the first linear telescopic driving mechanism to drive the disc-type driving structure, to allow the blade to reach the target pitch angle; and
wherein the preset threshold is greater than 0 degree.

In a third aspect, a blade pitch varying control device for the pitch varying device for the wind turbine blade is further provided according to an embodiment of the present application, including:
an acquiring unit configured to acquire an included angle between a target pitch angle and a present pitch angle;
a determining unit configured to compare the included angle with a preset threshold; and
a signal sending unit, wherein
   in a case that the included angle is greater than the preset threshold, the signal sending unit is configured to send a first control signal, and the first control signal is configured to control the second linear telescopic driving mechanism to drive the disc-type driving structure, to allow the blade to approach the target pitch angle; and
   in a case that the included angle is smaller than or equal to the preset threshold, the signal sending unit is configured to send a second control signal, and the second control signal is configured to control the first linear telescopic driving mechanism to drive the disc-type driving structure, to allow the blade to reach the target pitch angle; and
   wherein the preset threshold is greater than 0 degree.

In a fourth aspect, a wind turbine is further provided according to an embodiment of the present application, including the above pitch varying device for the wind turbine blade and the blade pitch varying control device for the wind turbine.

A pitch varying device, a pitch varying method and a pitch varying control device for a wind turbine blade and a wind turbine are provided according to the present application. The pitch varying device replaces an existing integral-type pitch varying system driven by a gear, realizes segmental pitch varying of the wind turbine, thus overcoming friction loss between tooth faces of a driving gear and the pitch bearing during the pitch varying process (particularly the small-angle pitch varying process), prolonging the service life of the pitch bearing, and reducing the maintenance cost, thereby improving the pitch varying performance and the power generation quality of the wind turbine.

### BRIEF DESCRIPTION OF THE DRAWINGS

The present application will be better understood from the following descriptions made in conjunction with the drawings.

Other features, objects, and advantages of the present application will become more apparent with reference to the detailed description of non-limitative embodiments made in conjunction with the drawings, in which, same or similar reference numerals refer to same or similar features.
Figure 1 is a schematic view showing the structure of a pitch varying device for a wind turbine blade according to an embodiment of the present application;
Figure 2 is a schematic view showing the structure of a pitch varying control device of the pitch varying device for the wind turbine blade according to an embodiment of the present application.

**Reference Numerals in the Figures:**

| | | | |
|---|---|---|---|
| 100 | hub, | 200 | pitch bearing, |
| 300 | disc-type driving structure, | 310 | track, |
| 400 | first linear telescopic driving mechanism, | | |
| 401 | first telescopic member, | 402 | first driving mechanism, |
| 405 | first clamping member, | | |
| 500 | second linear telescopic driving mechanism, | | |
| 501 | second telescopic member, | 502 | second driving mechanism, |
| 505 | second clamping member. | | |

### DETAIL DESCRIPTION

Features in various aspects and exemplary embodiments of the present application are described in detail below. In the following detailed description, numerous specific details are set forth in order to help thorough understanding of the present application. However, it is obvious to those skilled in the art that the present application may be implemented without some of these specific details. The following descriptions of the embodiments are merely intended to provide better understanding of the present application by illustrating examples of the present application. The present application is not limited to any specific configuration and algorithm presented hereinafter; and any modification, replacement and improvement of elements, members and algorithms are covered in the scope of the present application without departing from the scope of the appended claims. In the drawings and the following description, well-known structures and techniques are not illustrated to avoid unnecessarily obscuring the present application.

Exemplary embodiments will be described more fully with reference to the accompanying drawings. However, the exemplary embodiments can be implemented in various forms, and it should not be construed that the present application is limited to the embodiments illustrated herein; on the contrary, these embodiments are provided to make the present application more all-sided and complete, and to fully convey the concepts of the exemplary embodiments to those skilled in the art. In the drawings, thicknesses of regions and layers may be exaggerated for clarity. Same reference numerals in the drawings indicate same or similar structures, and thus their detailed descriptions are omitted.

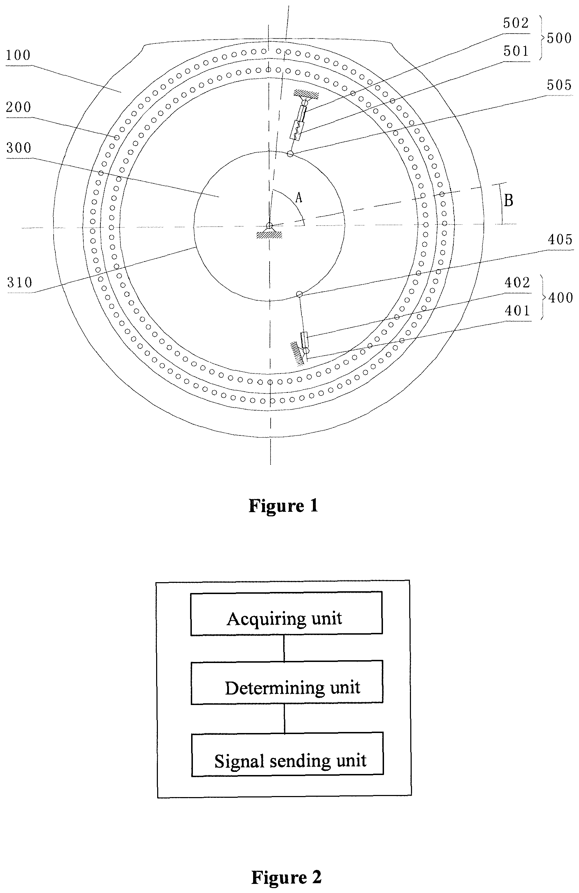

As shown in Figure 1, a pitch varying device for a wind turbine blade is provided according to an embodiment of the present application, which is configured to control a pitch angle of a blade rotatably mounted on a hub 100. The blade is mounted on the hub 100 through a pitch bearing 200, and the pitch varying device for the wind turbine blade includes a disc-type driving structure 300, a first linear telescopic driving mechanism 400, and a second linear telescopic driving mechanism 500.

The disc-type driving structure 300 is fixedly mounted on the blade and is perpendicular to an axis of the pitch bearing 200, and a track 310 surrounding the axis of the pitch bearing 200 is provided on the disc-type driving structure 300.

The first linear telescopic driving mechanism 400 has one end hinged to the hub 100, and another end connected to the track 310 through a first clamping member 405 capable of clamping the track 310, and the first linear telescopic driving mechanism 400 and the first clamping member 405 are connected by hinge connection.

The second linear telescopic driving mechanism 500 has one end hinged to the hub 100, and another end connected to the track 310 through a second clamping member 505 capable of clamping the track 310, and the second linear telescopic driving mechanism 500 and the second clamping member 505 are connected by hinge connection.

In the pitch varying device for the wind turbine blade according to this embodiment, the first linear telescopic driving mechanism 400 may use a high-accuracy actuating device to achieve accurate actuation, and the second linear telescopic driving mechanism 500 may use a high thrust and long stroke actuating device to perform long stroke actuation. The two telescopic driving mechanisms cooperate to replace the existing integral type pitch varying system driven by a gear, and thus, small-angle pitch varying control of the blade can be achieved by only using the first linear telescopic driving mechanism 400; and in a case that large-angle pitch varying control of the blade is required, first the second linear telescopic driving mechanism 500 is used for driving the blade, and then the first linear telescopic driving mechanism 400 is used for controlling the blade when a pitch varying angle is about to be reached, thereby realizing accurate control of the blade pitch varying angle.

In the pitch varying device for the wind turbine blade according to this embodiment, two telescopic driving mechanisms are employed to perform segmental actuation, thus overcoming friction loss between tooth faces of a driving gear and the pitch bearing during the pitch varying process (particularly the small-angle pitch varying process), prolonging the service life of the pitch bearing, and reducing the maintenance cost, thereby improving the pitch varying performance and the power generation quality of the wind turbine.

In the pitch varying device for the wind turbine blade according to this embodiment, when the first linear telescopic driving mechanism 400 drives the disc-type driving structure 300, the first clamping member 405 clamps the track 310, and the second clamping member 505 is disengaged from the track 310; and when the second linear telescopic driving mechanism 500 drives the disc-type driving structure 300, the first clamping member 405 is disengaged from the track 310, and the second clamping member 405 clamps the track 310.

The disc-type driving structure 300 is fixedly mounted on an inner ring or outer ring, that is fixedly connected to the blade, of the pitch bearing 200. For example, in a case that the outer ring of the pitch bearing 200 is fixedly connected to the blade, the disc-type driving structure 300 is fixedly mounted at the outer ring of the pitch bearing 200; or, in a case that the inner ring of the pitch bearing 200 is fixedly connected to the blade, the disc-type driving structure 300 is fixedly mounted at the inner ring of the pitch bearing 200.

The track 310 may be a single track, and herein, the track 310 may be in the shape of a circle, an oval or an arc (i.e., part of a circle), and a center of the above circle, oval or arc is preferably the axis of the pitch bearing.

Optionally, the track 310 may be dual tracks, and the track 310 may be in the shape of a circle, an oval or an arc (i.e., part of a circle), and a center of the above circle, oval or arc is preferably the axis of the pitch bearing. In this case, the first linear telescopic driving mechanism 400 is connected to one track of the dual tracks, and the second linear telescopic driving mechanism 500 is connected to the other track of the dual tracks.

In the pitch varying device for the wind turbine blade according to this embodiment, the first linear telescopic driving mechanism 400 includes a first telescopic member 401 and a first driving mechanism 402. The first driving mechanism 402 drives the first telescopic member 401 to make a telescopic movement, the first driving mechanism 402 is hinged to the hub 100, and the first telescopic member 401 is hinged to the first clamping member 405.

The first driving mechanism 402 may be a linear motor or a hydraulic cylinder, the first telescopic member 401 is a telescopic rod, and the linear telescopic driving can be realized by using the linear motor or the hydraulic cylinder to drive the telescopic rod.

The first driving mechanism 402 may also be a bidirectional motor, accordingly, the first telescopic member 401 is a screw rod, and the screw rod is driven by the bidirectional motor to linearly drive a sleeve on the screw rod.

In the pitch varying device for the wind turbine blade according to this embodiment, the second linear telescopic driving mechanism 500 includes a second telescopic member 501 and a second driving mechanism 502. The second driving mechanism 502 drives the second telescopic member 501 to make a telescopic movement, the second driving mechanism 502 is hinged to the hub 100, and the second telescopic member 501 is hinged to the second clamping member 505.

The second driving mechanism 502 may be a linear motor or a hydraulic cylinder, the second telescopic member 501 is a telescopic rod, and the linear telescopic driving can be realized by using the linear motor or the hydraulic cylinder to drive the telescopic rod.

The second driving mechanism 502 may also be a bidirectional motor, accordingly, the second telescopic member 501 is a screw rod, and the screw rod is driven by the bidirectional motor to linearly drive a sleeve on the screw rod. The bidirectional motor is characterized by having a high actuation accuracy and a high control accuracy, and thus is adapted for small thrust situations, and is adapted for fine adjustment of pitch varying in situations that a wind speed is near a rated condition. The combination of the bidirectional motor and the screw rod can increase the thrust and stroke of the pitch varying driving mechanism, and thus is adapted for working conditions of a high wind speed or normal start and stop. By subdividing the pitch varying conditions, the pitch varying driving mechanism is subdivided, and features of the combination of the bidirectional motor and the screw rod are rationally utilized to reduce the cost of the pitch varying system, improve the accuracy and reliability of the pitch varying system, thereby improving the power generation quality of the wind turbine.

Optionally, the first linear telescopic driving mechanism 400 and the second linear telescopic driving mechanism 500 may employ the same structural design, or may employ different structural designs, that is, one of them employs the design of a high thrust and a long stroke, and the other one employs the design of a high accuracy and a short stroke, to meet control requirements for different accuracies and strokes. For example, in a case that a high thrust is required, the first linear telescopic driving mechanism 400 may employ multiple driving mechanisms connected in parallel as the first driving mechanism 402, to drive the first telescopic member 401, so as to provide a higher thrust, or, the first linear telescopic driving mechanism 400 may employ multiple driving mechanisms, each driving mechanism drives one respective telescopic member, fixed positions of all the driving mechanisms are spaced from a blade center by the same distances, and included angles between all the telescopic members and the track 310 are equal, thereby ensuring that the multiple driving mechanisms can drive the multiple telescopic members synchronously.

A control method for the pitch varying device for the wind turbine blade is further provided according to an embodiment of the present application, including:
acquiring an included angle A between a target pitch angle and a present pitch angle;
comparing the included angle A with a preset threshold B, wherein generally, the included angle A may be greater than the preset threshold B, and may also be smaller than the preset threshold B, and regarding these two situations:
   in a case that the included angle A is greater than the preset threshold B, sending a first control signal which is configured to control the second linear telescopic driving mechanism 500 to drive the disc-type driving structure, to allow the blade to approach the target pitch angle; and
   in a case that the included angle A is smaller than or equal to the preset threshold B, sending a second control signal which is configured to control the first linear telescopic driving mechanism 400 to drive the disc-type driving structure, to allow the blade to reach the target pitch angle.

Positions of the first linear telescopic driving mechanism 400 and the second linear telescopic driving mechanism 500 in Figure 1 are illustrative examples. It should be noted that, the positions of the first linear telescopic driving mechanism 400 and the second linear telescopic driving mechanism 500 are not limited to the positions shown in Figure 1, and can be adjusted by those skilled in the art during implementation according to the design requirements.

According to the above control method, in the case that the included angle A is greater than the preset threshold B, first the second linear telescopic driving mechanism 500 is used to drive the blade to approach the target pitch angle; and in a case that the included angle A is smaller than (or equal to) the preset threshold B, the second linear telescopic driving mechanism 500 is controlled to stop, and at the same time, the first linear telescopic driving mechanism 400 is started to continue to drive the blade to reach the target pitch angle.

The included angle A ranges from 0 to 90 degrees, and the preset threshold B ranges from 0.1 to 5 degrees. The preset threshold B can be adjusted according to the requirements of design and usage, for example, the preset threshold B can be generally set to be 2 or 3 degrees.

In the case that the included angle A is smaller than or equal to the preset threshold B, a first reset signal is sent and is configured to allow the first clamping member 405 to clamp the track 310, the second clamping member 505 to be disengaged from the track 310, and the second linear telescopic driving mechanism 500 to be reset to an initial position.

In the case that the included angle A is greater than the preset threshold B, a second reset signal is sent and is configured to allow the first clamping member 405 to be disengaged from the track 310, the second clamping member 505 to clamp the track 310, and the first linear telescopic driving mechanism 400 to be reset to an initial position.

Controlling the two clamping members can avoid a self-locking phenomenon of the two telescopic driving mechanisms during the driving process. When one of the telescopic drive mechanisms is started, the other one of the telescopic drive mechanisms is automatically reset, which facilitates the control of the next pitch varying driving.

Both the second linear telescopic driving mechanism 500 and the first linear telescopic driving mechanism 400 at the initial positions are not perpendicular to the track 310, which can avoid the situation that a driving direction cannot be controlled during the driving process of the linear telescopic driving mechanisms, thus avoiding damages to the track 310 on the disc-type driving structure 300.

When the blade rotates to the target pitch angle, a stop signal is sent and is configured to control the two linear telescopic driving mechanisms to stop at the same time, and to control the two clamping members to clamp the track, so as to lock the pitch varying angle through the two linear telescopic driving mechanisms, thus the pitch varying angle of the blade is more stable and is not apt to be affected by the wind.

A blade pitch varying control device is further provided according to an embodiment of the present application, including:
an acquiring unit configured to acquire an included angle A between a target pitch angle and a present pitch angle;
a comparing unit configured to compare the included angle A with a preset threshold B;
a signal sending unit; wherein
   in a case that the included angle A is greater than the preset threshold B, the signal sending unit is configured to send a first control signal, and the signal sending unit is configured to control the second linear telescopic driving mechanism 500 to drive the disc-type driving structure 300, to allow the blade to approach the target pitch angle; and
   in a case that the included angle A is smaller than or equal to the preset threshold B, the signal sending unit is configured to send a second control signal, and the second control signal is configured to control the first linear telescopic driving mechanism 400 to drive the disc-type driving structure 300, to allow the blade to reach the target pitch angle.

The included angle A ranges from 0 to 90 degrees, and the preset threshold B ranges from 0.1 to 5 degrees. The preset threshold B can be adjusted according to the requirements of design and usage, for example, the preset threshold B can be generally set to be 2 or 3 degrees.

Optionally, in the case that the included angle A is smaller than or equal to the preset threshold B, the signal sending unit is further configured to send a first reset signal, and the first reset signal is configured to control the second linear telescopic driving mechanism 500 to be reset to an initial position; and
in the case that the included angle A is greater than the preset threshold B, the signal sending unit is configured to send a second reset signal, and the second reset signal is configured to control the first linear telescopic driving mechanism 400 to be reset to an initial position.

Optionally, both the second linear telescopic driving mechanism 500 and the first linear telescopic driving mechanism 400 at the initial positions are not perpendicular to the track 310.

Optionally, when the blade rotates to the target pitch angle, the signal sending unit is further configured to send a stop signal, and the stop signal is configured to control the two linear telescopic driving mechanisms to stop at the same time, and to control the two clamping members to clamp the track.

Optionally, the blade pitch varying control device is embedded in a main controller and/or a pitch varying controller.

In performing a pitch varying control on the blade, the blade pitch varying control device is used to control two clamping members to clamp the track alternately, to avoid a phenomenon that the blade is locked up when the two clamping members clamp the track at the same time.

The blade pitch varying control device according to this embodiment may be an electronic control device, for example, the clamping action of each clamping member is realized through driving of a small motor, and the action of the small motor is controlled by the blade pitch varying control device to ensure a smooth pitch varying process.

The blade pitch varying control device in Figure 2 is only an illustrative example. It should be understood that, the blade pitch varying control device in this embodiment may also employ a mechanical transmission device, in particular, it can be realized through linkage with the two linear telescopic driving mechanisms. For example, the first clamping member 405 is linked with the first linear telescopic driving mechanism 400, and when the first linear telescopic driving mechanism 400 is started, it automatically controls the first clamping member 405 to clamp the track 310; and when the first linear telescopic driving mechanism 400 is stopped, it automatically controls the first clamping member 405 to release the track. The second clamping member 505 can be designed with reference to the design of the first clamping member 405, which will not be further described herein.

A wind turbine is further provided according to an embodiment of the present application, including the pitch varying device and the pitch varying control device for the wind turbine blade according to the above embodiments.

The wind turbine according to the embodiment of the present application replaces an existing integral-type pitch varying system driven by a gear, and realizes segmental pitch varying of the wind turbine, thus overcoming friction loss between tooth faces of a driving gear and the pitch bearing during the pitch varying process(particularly the small-angle pitch varying process), prolonging the service life of the pitch bearing, and reducing the maintenance cost, thereby improving the pitch varying performance and the power generation quality of the wind turbine.

## Claims

1. A pitch varying device for a wind turbine blade, configured to control a pitch angle of a blade rotatably mounted on a hub (100), and the blade being mounted on the hub (100) through a pitch bearing (200), and the pitch varying device for the wind turbine blade comprises:
a disc-type driving structure (300) fixedly mounted on the blade and being perpendicular to an axis of the pitch bearing (200), wherein a track (310) surrounding the axis of the pitch bearing (200) is provided on the disc-type driving structure (300);
a first linear telescopic driving mechanism (400) having one end hinged to the hub (100) and another end connected to the track (310) through a first clamping member (405) capable of clamping the track (310), wherein the first linear telescopic driving mechanism (400) and the first clamping member (405) are connected through hinge connection; and
a second linear telescopic driving mechanism (500) having one end hinged to the hub (100) and another end connected to the track (310) through a second clamping member (505) capable of clamping the track (310), wherein the second linear telescopic driving mechanism (500) and the second clamping member (505) are connected through hinge connection; wherein
in a case that an included angle between a target pitch angle and a present pitch angle is greater than a preset threshold, the second linear telescopic driving mechanism (500) is configured to drive the disc-type driving structure (300); and
in a case that the included angle is smaller than or equal to the preset threshold, the first linear telescopic driving mechanism (400) is configured to drive the disc-type driving structure (300).

2. The pitch varying device for the wind turbine blade according to claim 1, wherein
when the first linear telescopic driving mechanism (400) drives the disc-type driving structure (300), the first clamping member (405) is configured to clamp the track (310), and the second clamping member (505) is configured to be disengaged from the track (310); and
when the second linear telescopic driving mechanism (500) drives the disc-type driving structure (300), the first clamping member (405) is configured to be disengaged from the track (310), and the second clamping member (505) is configured to clamp the track (310).

3. The pitch varying device for the wind turbine blade according to claim 1 or 2, wherein the disc-type driving structure (300) is fixedly mounted on an inner ring or an outer ring, that is fixedly connected to the blade, of the pitch bearing (200).

4. The pitch varying device for the wind turbine blade according to claim 1 or 2, wherein the first linear telescopic driving mechanism (400) comprises a first telescopic member (401) and a first driving mechanism (402), the first driving mechanism (402) is configured to drive the first telescopic member (401) to make a telescopic movement, the first driving mechanism (402) is hinged to the hub (100), and the first telescopic member (401) is hinged to the first clamping member (405).

5. The pitch varying device for the wind turbine blade according to claim 1 or 2, wherein the second linear telescopic driving mechanism (500) comprises a second telescopic member (501) and a second driving mechanism (502), the second driving mechanism (502) is configured to drive the second telescopic member (501) to make a telescopic movement, the second driving mechanism (502) is hinged to the hub (100), and the second telescopic member (501) is hinged to the second clamping member (505).

6. A control method for the pitch varying device for the wind turbine blade according to any one of claims 1 to 5, comprising:
acquiring the included angle between the target pitch angle and the present pitch angle;
comparing the included angle with the preset threshold; and
in a case that the included angle is greater than the preset threshold, sending a first control signal, wherein the first control signal is configured to control the second linear telescopic driving mechanism (500) to drive the disc-type driving structure (300), to allow the blade to approach the target pitch angle; and
in a case that the included angle is smaller than or equal to the preset threshold, sending a second control signal, wherein the second control signal is configured to control the first linear telescopic driving mechanism (400) to drive the disc-type driving structure (300), to allow the blade to reach the target pitch angle; and
wherein the preset threshold is greater than 0 degree.

7. The control method according to claim 6, comprising:
in the case that the included angle is smaller than or equal to the preset threshold, sending a first reset signal, wherein the first reset signal is configured to control the second linear telescopic driving mechanism (500) to be reset to an initial position; and
in the case that the included angle is greater than the preset threshold, sending a second reset signal, wherein the second reset signal is configured to control the first linear telescopic driving mechanism (400) to be reset to an initial position.

8. The control method according to claim 7, wherein both the second linear telescopic driving mechanism (500) and the first linear telescopic driving mechanism (400) at the initial positions are not perpendicular to the track (310).

9. The control method according to claim 6, comprising:
sending a stop signal when the blade rotates to the target pitch angle, wherein the stop signal is configured to control the two linear telescopic driving mechanisms to stop at the same time, and to control the two clamping members to clamp the track.

10. A blade pitch varying control device configured to control the pitch varying device for the wind turbine blade according to any one of claims 1 to 5, comprising:
an acquiring unit configured to acquire an included angle between a target pitch angle and a present pitch angle;
a determining unit configured to compare the included angle with a preset threshold; and
a signal sending unit, wherein in a case that the included angle is greater than the preset threshold, the signal sending unit is configured to send a first control signal, and the first control signal is configured to control the second linear telescopic driving mechanism (500) to drive the disc-type driving structure (300), to allow the blade to approach the target pitch angle; and
in a case that the included angle is smaller than or equal to the preset threshold, the signal sending unit is configured to send a second control signal, and the second control signal is configured to control the first linear telescopic driving mechanism (400) to drive the disc-type driving structure (300), to allow the blade to reach the target pitch angle; and
wherein the preset threshold is greater than 0 degree.

11. The blade pitch varying control device according to claim 10, wherein
in the case that the included angle is smaller than or equal to the preset threshold, the signal sending unit is further configured to send a first reset signal, and the first reset signal is configured to control the second linear telescopic driving mechanism (500) to be reset to an initial position; and
in the case that the included angle is greater than the preset threshold, the signal sending unit is further configured to send a second reset signal, and the second reset signal is configured to control the first linear telescopic driving mechanism (400) to be reset to an initial position.

12. The blade pitch varying control device according to claim 11, wherein both the second linear telescopic driving mechanism (500) and the first linear telescopic driving mechanism (400) at the initial positions are not perpendicular to the track (310).

13. The blade pitch varying control device according to claim 10, wherein the signal sending unit is further configured to send a stop signal when the blade rotates to the target pitch angle, and the stop signal is configured to control the two linear telescopic driving mechanisms to stop at the same time, and to control the two clamping members to clamp the track.

14. The blade pitch varying control device according to any one of claims 10 to 13, wherein the blade pitch varying control device is embedded in a main controller and/or a pitch varying controller.

15. A wind turbine, comprising the pitch varying device for the wind turbine blade according to any one of claims 1 to 5, and the blade pitch varying control device for the wind turbine according to any one of claims 10 to 14.

## Patentansprüche

1. Neigungswinkelverstellungsvorrichtung für eine Windturbinenschaufel, die konfiguriert ist, einen Neigungswinkel einer an einer Nabe (100) drehbar angebrachten Schaufel zu steuern, wobei die Schaufel über ein Neigungslager (200) an der Nabe (100) angebracht ist und die Neigungswinkelverstellungsvorrichtung für die Windturbinenschaufel aufweist:
eine scheibenartige Antriebsstruktur (300), die an der Schaufel fest angebracht ist und senkrecht zu einer Achse des Neigungslagers (200) ist, wobei eine die Achse des Neigungslagers (200) umgebende Schiene (310) an der scheibenartigen Antriebsstruktur (300) bereitgestellt ist;
einen ersten linearen teleskopischen Antriebsmechanismus (400), ein Ende dessen mit der Nabe (100) gelenkig verbunden ist und ein anderes Ende dessen mit der Schiene (310) verbunden ist und zwar über ein erstes Klemmelement (405), das fähig ist, die Schiene (310) zu klemmen, wobei der erste lineare teleskopische Antriebsmechanismus (400) und das erste Klemmelement (405) über eine Gelenkverbindung verbunden sind; und
einen zweiten linearen teleskopischen Antriebsmechanismus (500), ein Ende dessen mit der Nabe (100) gelenkig verbunden ist und ein anderes Ende dessen mit der Schiene (310) verbunden ist und zwar über ein zweites Klemmelement (505), das fähig ist, die Schiene (310) zu klemmen, wobei der zweite lineare teleskopische Antriebsmechanismus (500) und das zweite Klemmelement (505) über eine Gelenkverbindung verbunden sind; wobei
in einem Fall, dass ein eingeschlossener Winkel zwischen einem Sollneigungswinkel und einem aktuellen Neigungswinkel größer als ein vorab gesetzter Schwellenwert ist, der zweite lineare teleskopische Antriebsmechanismus (500) konfiguriert ist, die scheibenartige Antriebsstruktur (300) anzutreiben; und
in einem Fall, dass der eingeschlossene Winkel kleiner oder gleich dem vorab gesetzten Schwellenwert ist, der erste lineare teleskopische Antriebsmechanismus (400) konfiguriert ist, die scheibenartige Antriebsstruktur (300) anzutreiben.

2. Neigungswinkelverstellungsvorrichtung für die Windturbinenschaufel nach Anspruch 1, wobei,
wenn der erste lineare teleskopische Antriebsmechanismus (400) die scheibenartige Antriebsstruktur (300) antreibt, das erste Klemmelement (405) konfiguriert ist, die Schiene (310) zu klemmen, und das zweite Klemmelement (505) konfiguriert ist, von der Schiene (310) losgelöst zu sein; und
wenn der zweite lineare teleskopische Antriebsmechanismus (500) die scheibenartige Antriebsstruktur (300) antreibt, das erste Klemmelement (405) konfiguriert ist, von der Schiene (310) losgelöst zu sein, und das zweite Klemmelement (505) konfiguriert ist, die Schiene (310) zu klemmen.

3. Neigungswinkelverstellungsvorrichtung für die Windturbinenschaufel nach Anspruch 1 oder 2, wobei die scheibenartige Antriebsstruktur (300) an einem mit der Schaufel fest verbundenen Innen- oder Außenring des Neigungslagers (200) fest angebracht ist.

4. Neigungswinkelverstellungsvorrichtung für die Windturbinenschaufel nach Anspruch 1 oder 2, wobei der erste lineare teleskopische Antriebsmechanismus (400) ein erstes teleskopisches Element (401) und einen ersten Antriebsmechanismus (402) aufweist, der erste Antriebsmechanismus (402) konfiguriert ist, das erste teleskopische Element (401) anzutreiben, um eine teleskopische Bewegung auszuüben, der erste Antriebsmechanismus (402) mit der Nabe (100) gelenkig verbunden ist, und das erste teleskopische Element (401) mit dem ersten Klemmelement (405) gelenkig verbunden ist.

5. Neigungswinkelverstellungsvorrichtung für die Windturbinenschaufel nach Anspruch 1 oder 2, wobei der zweite lineare teleskopische Antriebsmechanismus (500) ein zweites teleskopisches Element (501) und einen zweiten Antriebsmechanismus (502) aufweist, der zweite Antriebsmechanismus (502) konfiguriert ist, das zweite teleskopische Element (501) anzutreiben, um eine teleskopische Bewegung auszuüben, der zweite Antriebsmechanismus (502) mit der Nabe (100) gelenkig verbunden ist, und das zweite teleskopische Element (501) mit dem zweiten Klemmelement (505) gelenkig verbunden ist.

6. Steuerverfahren für die Neigungswinkelverstellungsvorrichtung für die Windturbinenschaufel nach einem der Ansprüche 1 bis 5, aufweisend:
Detektieren des eingeschlossenen Winkels zwischen dem Sollneigungswinkel und dem aktuellen Neigungswinkel;
Vergleichen des eingeschlossenen Winkels mit dem vorab gesetzten Schwellenwert; und
in einem Fall, dass der eingeschlossene Winkel größer als der vorab gesetzte Schwellenwert ist, Senden eines ersten Steuersignals, wobei das erste Steuersignal konfiguriert ist, den zweiten linearen teleskopischen Antriebsmechanismus (500) zu steuern, die scheibenartige Antriebsstruktur (300) anzutreiben, um der Schaufel zu erlauben, sich dem Sollneigungswinkel zu nähern; und
in einem Fall, dass der eingeschlossene Winkel kleiner oder gleich dem vorab gesetzten Schwellenwert ist, Senden eines zweiten Steuersignals, wobei das zweite Steuersignal konfiguriert ist, den ersten linearen teleskopischen Antriebsmechanismus (400) zu steuern, die scheibenartige Antriebsstruktur (300) anzutreiben, um der Schaufel zu erlauben, den Sollneigungswinkel zu erreichen; und
wobei der vorab gesetzte Schwellenwert größer als 0 Grad ist.

7. Steuerverfahren nach Anspruch 6, aufweisend:
in dem Fall, dass der eingeschlossene Winkel kleiner oder gleich dem vorab gesetzten Schwellenwert ist, Senden eines ersten Rücksetzsignals, wobei das erste Rücksetzsignal konfiguriert ist, den zweiten linearen teleskopischen Antriebsmechanismus (500) zu steuern, um auf eine Anfangsposition zurückgesetzt zu werden; und
in dem Fall, dass der eingeschlossene Winkel größer als der vorab gesetzte Schwellenwert ist, Senden eines zweiten Rücksetzsignals, wobei das zweite Rücksetzsignal konfiguriert ist, den ersten linearen teleskopischen Antriebsmechanismus (400) zu steuern, um auf eine Anfangsposition zurückgesetzt zu werden.

8. Steuerverfahren nach Anspruch 7, wobei sowohl der zweite lineare teleskopische Antriebsmechanismus (500) als auch der erste lineare teleskopische Antriebsmechanismus (400) an den Anfangspositionen nicht senkrecht zu der Schiene (310) sind.

9. Steuerverfahren nach Anspruch 6, aufweisend:
Senden eines Stoppsignals, wenn die Schaufel zu dem Sollneigungswinkel rotiert, wobei das Stoppsignal konfiguriert ist, die zwei linearen teleskopischen Antriebsmechanismen zu steuern, gleichzeitig zu stoppen, und die zwei Klemmelemente zu steuern, die Schiene zu klemmen.

10. Schaufelneigungswinkelverstellung-Steuervorrichtung konfiguriert zur Steuerung der Neigungswinkelverstellungsvorrichtung für die Windturbinenschaufel nach einem der Ansprüche 1 bis 5, aufweisend:
eine Detektionseinheit zum Detektieren eines eingeschlossenen Winkels zwischen einem Sollneigungswinkel und einem aktuellen Neigungswinkel;
eine Bestimmungseinheit zum Vergleichen des eingeschlossenen Winkels mit einem vorab gesetzten Schwellenwert; und
eine Signalsendeeinheit, wobei in einem Fall, dass der eingeschlossene Winkel größer als der vorab gesetzte Schwellenwert ist, die Signalsendeeinheit konfiguriert ist, ein erstes Steuersignal zu senden, und das erste Steuersignal konfiguriert ist, den zweiten linearen teleskopischen Antriebsmechanismus (500) zu steuern, die scheibenartige Antriebsstruktur (300) anzutreiben, um der Schaufel zu erlauben, sich dem Sollneigungswinkel zu nähern; und
in einem Fall, dass der eingeschlossene Winkel kleiner oder gleich dem vorab gesetzten Schwellenwert ist, die Signalsendeeinheit konfiguriert ist, ein zweites Steuersignal zu senden, und das zweite Steuersignal konfiguriert ist, den ersten linearen teleskopischen Antriebsmechanismus (400) zu steuern, die scheibenartige Antriebsstruktur (300) anzutreiben, um der Schaufel zu erlauben, den Sollneigungswinkel zu erreichen; und
wobei der vorab gesetzte Schwellenwert größer als 0 Grad ist.

11. Schaufelneigungswinkelverstellung-Steuervorrichtung nach Anspruch 10, wobei
in dem Fall, dass der eingeschlossene Winkel kleiner oder gleich dem vorab gesetzten Schwellenwert ist, die Signalsendeeinheit ferner konfiguriert ist, ein erstes Rücksetzsignal zu senden, und das erste Rücksetzsignal konfiguriert ist, den zweiten linearen teleskopischen Antriebsmechanismus (500) zu steuern, um auf eine Anfangsposition zurückgesetzt zu werden; und
in dem Fall, dass der eingeschlossene Winkel größer als der vorab gesetzte Schwellenwert ist, die Signalsendeeinheit ferner konfiguriert ist, ein zweites Rücksetzsignal zu senden, und das zweite Rücksetzsignal konfiguriert ist, den ersten linearen teleskopischen Antriebsmechanismus (400) zu steuern, um auf eine Anfangsposition zurückgesetzt zu werden.

12. Schaufelneigungswinkelverstellung-Steuervorrichtung nach Anspruch 11, wobei sowohl der zweite lineare teleskopische Antriebsmechanismus (500) als auch der erste lineare teleskopische Antriebsmechanismus (400) an den Anfangspositionen nicht senkrecht zu der Schiene (310) sind.

13. Schaufelneigungswinkelverstellung-Steuervorrichtung nach Anspruch 10, wobei die Signalsendeeinheit ferner konfiguriert ist, ein Stoppsignal zu senden, wenn die Schaufel zu dem Sollneigungswinkel rotiert, und das Stoppsignal konfiguriert ist, die zwei linearen teleskopischen Antriebsmechanismen zu steuern, gleichzeitig zu stoppen, und die zwei Klemmelemente zu steuern, die Schiene zu klemmen.

14. Schaufelneigungswinkelverstellung-Steuervorrichtung nach einem der Ansprüche 10 bis 13, wobei die Schaufelneigungswinkelverstellung-Steuervorrichtung in eine Hauptsteuerung und/oder eine Neigungswinkelverstellungssteuerung eingebettet ist.

15. Windturbine, aufweisend die Neigungswinkelverstellungsvorrichtung für die Windturbinenschaufel nach einem der Ansprüche 1 bis 5 und die Schaufelneigungswinkelverstellung-Steuervorrichtung für die Windturbine nach einem der Ansprüche 10 bis 14.

## Revendications

1. Dispositif de variation de pas pour une pale d'éolienne, configuré pour commander un angle de pas d'une pale montée en rotation sur un moyeu (100), et la pale étant montée sur le moyeu (100) par le biais d'une articulation de pas (200), et le dispositif de variation de pas pour la pale d'éolienne comprend :
une structure d'entraînement de type à disque (300) montée de manière fixe sur la pale et étant perpendiculaire à un axe de l'articulation de pas (200), dans lequel un rail (310) entourant l'axe de l'articulation de pas (200) est prévu sur la structure d'entraînement de type à disque (300) ;
un premier mécanisme d'entraînement télescopique linéaire (400) ayant une extrémité articulée au moyeu (100) et une autre extrémité raccordée au rail (310) par le biais d'un premier élément de serrage (405) capable de serrer le rail (310), dans lequel le premier mécanisme d'entraînement télescopique linéaire (400) et le premier élément de serrage (405) sont raccordés par le biais du raccordement de charnière ; et
un second mécanisme d'entraînement télescopique linéaire (500) ayant une extrémité articulée au moyeu (100) et une autre extrémité raccordée au rail (310) par le biais d'un second élément de serrage (505) capable de serrer le rail (310), dans lequel le second mécanisme d'entraînement télescopique linéaire (500) et le second élément de serrage (505) sont raccordés par le biais du raccordement de charnière; dans lequel:
dans un cas dans lequel un angle inclus entre l'angle de calage cible et un présent angle de calage est supérieur à un seuil prédéterminé, le second mécanisme d'entraînement télescopique linéaire (500) est configuré pour entraîner la structure d'entraînement de type à disque (300); et
dans un cas dans lequel l'angle inclus est inférieur ou égal au seuil prédéterminé, le premier mécanisme d'entraînement télescopique linéaire (400) est configuré pour entraîner la structure d'entraînement de type à disque (300).

2. Dispositif de variation de pas pour une pale d'éolienne selon la revendication 1, dans lequel :
lorsque le premier mécanisme d'entraînement télescopique linéaire (400) entraîne la structure d'entraînement de type à disque (300), le premier élément de serrage (405) est configuré pour serrer le rail (310), et le second élément de serrage (505) est configuré pour être dégagé du rail (310) ; et
lorsque le second mécanisme d'entraînement télescopique linéaire (500) entraîne la structure d'entraînement de type à disque (300), le premier élément de serrage (405) est configuré pour être dégagé du rail (310), et le second élément de serrage (505) est configuré pour serrer le rail (310).

3. Dispositif de variation de pas pour une pale d'éolienne selon la revendication 1 ou 2, dans lequel la structure d'entraînement de type à disque (300) est montée de manière fixe sur une bague interne ou une bague externe, qui est raccordée de manière fixe à la pale, de l'articulation de pas (200).

4. Dispositif de variation de pas pour une pale d'éolienne selon la revendication 1 ou 2, dans lequel le premier mécanisme d'entraînement télescopique linéaire (400) comprend un premier élément télescopique (401) et un premier mécanisme d'entraînement (402), le premier mécanisme d'entraînement (402) est configuré pour entraîner le premier élément télescopique (401) pour réaliser un mouvement télescopique, le premier mécanisme d'entraînement (402) est articulé au moyeu (100), et le premier élément télescopique (401) est articulé au premier élément de serrage (405).

5. Dispositif de variation de pas pour une pale d'éolienne selon la revendication 1 ou 2, dans lequel le second mécanisme d'entraînement télescopique linéaire (500) comprend un second élément télescopique (501) et un second mécanisme d'entraînement (502), le second mécanisme d'entraînement (502) est configuré pour entraîner le second élément télescopique (501) pour réaliser un mouvement télescopique, le second mécanisme d'entraînement (502) est articulé au moyeu (100), et le second élément télescopique (501) est articulé au second élément de serrage (505).

6. Procédé de commande pour le dispositif de variation de pas pour une pale d'éolienne selon l'une quelconque des revendications 1 à 5, comprenant les étapes consistant à :
acquérir l'angle inclus entre l'angle de calage cible et le présent angle de calage;
comparer l'angle inclus avec le seuil prédéterminé; et
dans un cas dans lequel l'angle inclus est supérieur au seuil prédéterminé, envoyer un premier signal de commande, dans lequel le premier signal de commande est configuré pour commander le second mécanisme d'entraînement télescopique linéaire (500) afin d'entraîner la structure d'entraînement de type à disque (300), pour permettre à la pale de se rapprocher de l'angle de calage cible; et
dans un cas dans lequel l'angle inclus est inférieur ou égal au seuil prédéterminé, envoyer un second signal de commande, dans lequel le second signal de commande est configuré pour commander le premier mécanisme d'entraînement télescopique linéaire (400) pour entraîner la structure d'entraînement de type à disque (300), pour permettre à la pale d'atteindre l'angle de calage cible ; et
dans lequel le seuil prédéterminé est supérieur à 0 degré.

7. Procédé de commande selon la revendication 6, comprenant les étapes consistant à:
dans le cas dans lequel l'angle inclus est inférieur ou égal au seuil prédéterminé, envoyer un premier signal de réinitialisation, dans lequel le premier signal de réinitialisation est configuré pour commander le second mécanisme d'entraînement télescopique linéaire (500) afin qu'il se réinitialise dans une position initiale; et
dans le cas dans lequel l'angle inclus est supérieur au seuil prédéterminé, envoyer un second signal de réinitialisation, dans lequel le second signal de réinitialisation est configuré pour commander le premier mécanisme d'entraînement télescopique linéaire (400) afin qu'il se réinitialise dans une position initiale.

8. Procédé de commande selon la revendication 7, dans lequel à la fois le second mécanisme d'entraînement télescopique linéaire (500) et le premier mécanisme d'entraînement télescopique linéaire (400) aux positions initiales ne sont pas perpendiculaires au rail (310).

9. Procédé de commande selon la revendication 6, comprenant l'étape consistant à :
envoyer un signal d'arrêt lorsque la pale tourne vers l'angle de calage cible, dans lequel le signal d'arrêt est configuré pour commander les deux mécanismes d'entraînement télescopiques linéaires pour qu'il s'arrêtent en même temps, et pour commander les deux éléments de serrage afin de serrer le rail.

10. Dispositif de commande de variation de pas de pale, configuré pour commander le dispositif de variation de pas pour une pale d'éolienne selon l'une quelconque des revendications 1 à 5, comprenant :
une unité d'acquisition configurée pour acquérir un angle inclus entre un angle de calage cible et un présent angle de calage ;
une unité de détermination configurée pour comparer l'angle inclus avec un seuil prédéterminé; et
une unité d'envoi de signal, dans lequel dans un cas dans lequel l'angle inclus est supérieur au seuil prédéterminé, l'unité d'envoi de signal est configurée pour envoyer un premier signal de commande, et le premier signal de commande est configuré pour commander le second mécanisme d'entraînement télescopique linéaire (500) afin d'entraîner la structure d'entraînement de type à disque (300), pour permettre à la pale de se rapprocher de l'angle de calage cible; et
dans un cas dans lequel l'angle inclus est inférieur ou égal au seuil prédéterminé, l'unité d'envoi de signal est configurée pour envoyer un second signal de commande, et le second signal de commande est configuré pour commander le premier mécanisme d'entraînement télescopique linéaire (400) pour entraîner la structure d'entraînement de type à disque (300), pour permettre à la pale d'atteindre l'angle de calage cible; et
dans lequel le seuil prédéterminé est supérieur à 0 degré.

11. Dispositif de commande de variation de pas de pale selon la revendication 10, dans lequel :
dans le cas dans lequel l'angle inclus est inférieur ou égal au seuil prédéterminé, l'unité d'envoi de signal est en outre configurée pour envoyer un premier signal de réinitialisation et le premier signal de réinitialisation est configuré pour commander le second mécanisme d'entraînement télescopique linéaire (500) pour être réinitialisé dans une position initiale; et
dans le cas dans lequel l'angle inclus est supérieur au seuil prédéterminé, l'unité d'envoi de signal est configurée en outre pour envoyer un second signal de réinitialisation, et le second signal de réinitialisation est configuré pour commander le premier mécanisme d'entraînement télescopique linéaire (400) pour être réinitialisé dans une position initiale.

12. Dispositif de commande de variation de pas de pale selon la revendication 11, dans lequel à la fois le second mécanisme d'entraînement télescopique linéaire (500) et le premier mécanisme d'entraînement télescopique linéaire (400) dans les positions initiales ne sont pas perpendiculaires au rail (310).

13. Dispositif de commande de variation de pas de pale selon la revendication 10, dans lequel l'unité d'envoi de signal est en outre configurée pour envoyer un signal d'arrêt lorsque la pale tourne à l'angle de calage cible, et le signal d'arrêt est configuré pour commander les deux mécanismes d'entraînement télescopiques linéaires pour s'arrêter en même temps, et pour commander les deux éléments de serrage pour serrer le rail.

14. Dispositif de commande de variation de pas de pale selon l'une quelconque des revendications 10 à 13, dans lequel le dispositif de commande de variation de pas de pale est intégré dans un organe de commande principal et/ou un organe de commande de variation de pas.

15. Éolienne, comprenant le dispositif de variation de pas pour une pale d'éolienne selon l'une quelconque des revendications 1 à 5 et le dispositif de commande de variation de pas de pale pour l'éolienne selon l'une quelconque des revendications 10 à 14.
